# EUROPEAN PATENT APPLICATION

(11) **EP 2 871 166 A1**
(43) Date of publication of application: **13.05.2015**
(21) Application number: 12885886.7
(22) Date of filing: 28.12.2012
(51) Int. Cl.: C03B 33/10, B26D 1/06

(54) **PLATE MATERIAL CUTTING DEVICE AND WORKING METHOD THEREOF**

(30) Priority: 26.09.2012 CN 201210365056
(71) Applicant: Glaston (Tianjin) Co., Ltd., Tianjin 301700 (CN)
(72) Inventor: QIN, Huade, Tianjin 301700 (CN)
(74) Representative: Lermer, Christoph
(86) International application number: PCT/CN2012/087768
(87) International publication number: WO 2014/048043

(57) **Abstract**

A plate material cutting mechanism and a working method thereof are disclosed herein. The cutting mechanism comprises a position limiter for limiting a lifting height of a cutting head shaft assembly, wherein the position limiter is installed above a cutting apparatus. The position limiter comprises a positioning assembly for limiting the lifting height of the cutting head shaft assembly and a displacement adjusting assembly, wherein the displacement adjusting assembly is installed between the cutting head shaft assembly and the positioning assembly, and installed on the cutting head shaft assembly or the positioning assembly to form an interval there-between through displacement adjustment. The cutting mechanism and the working method thereof reduce a cylinder load, increase a running speed, save energy consumption, and improve working efficiency.

## Description

### Technical Field

The present invention relates to the field of plate material cutting equipment, in particular, to a plate material cutting mechanism and its working methods.

### Background Art

At present, there are two methods for cutting plate materials. One method is that: maintain the position of cutting mechanism unchanged, and press the cutting head on the surface of plate material, to achieve the cutting of plate material by moving the position of the plate material to be cut. The other method is that: maintain the position of plate material unchanged, and move the position of the cutting mechanism to realize cutting of plate materials.

At present, the second method is more commonly adopted. In controlling the cutting mechanism, what is more important is to control the falling and lifting of cutting head (as described in the Description, "falling" and "lifting" of cutting head is described relative to the plate material; that is, when the cutting head is close to the plate material, it is "falling"; and when the cutting head is away from the plate material, it is "lifting"; Similarly, "top", "above" refer to the end away from the plate material; and "bottom" refers to the end approaching to the plate material), which generally have two drive ways. The first way is that, the cutting head is lifted and fallen driven by cylinder with linear guide. This structure is a statically indeterminate structure, which proposes higher requirements for manufacturing and installation. It is required to guarantee the precision of cutting head in the direction perpendicular to the plate material through installation adjustment, and it is easy to cause blocking in the course. The second way is that, the whole cutting head assembly is lifted and fallen driven by cylinder, and such structure will increase the load of cylinder, which will inevitably result in increased costs, and produce a great impact on the plate material such as glass when the cutting head falls down, especially when cutting thin glass, the thin glass will often be crushed. Moreover, the cutting head stroke cannot be accurately adjusted according to different thicknesses of glass plates, and when the thickness of the plate in the site is changed, it is often necessary to adjust the cutting head to appropriate position repeatedly.

When the thickness of the plate material is changed, it is required to change the cutting head stroke. To resolve this problem, a technical solution is proposed for the commercially available products, i.e. a thickness detection device is installed on the whole cutting head assembly; and through detecting the thickness of the plate to be cut, adjust the lifting and falling stroke of the whole cutting head assembly driven by cylinder. For example, when cutting the glass with thickness 5mm, the stroke of cutting head assembly in the Z-axis is 45mm, Z-axis refers to the axis perpendicular to the plate material; when cutting a glass with thickness of 2mm, the thickness detection device can detect the thickness reduced by 3mm, and the stroke of cutting head assembly in the Z-axis will be changed to 48 mm driven by the cylinder. Through the installed thickness detection device, the cutting stroke can be accurately and timely adjusted according to different thicknesses of the glass plates, but in the actual production process, the following drawbacks may appear:
1. The whole cutting head assembly is lifted and fallen driven by the cylinder with large cylinder load, and the working efficiency is low, the working cost is high;
2. The control of cutting head stroke by the thickness detection device has poor reliability. Once the thickness detection device fails or an error occurs, the plate materials to be cut may be crushed by the cutting head or the cutting head cannot reach the plate material, thus, the cutting cannot be completed.

### Summary of the Invention

The present invention is directed to technical defects of the prior art and to provide a cutting mechanism of plate material with high reliability that can reduce the cylinder drive load.

Technical solution to achieve the object of the present invention is as follows. A plate material cutting mechanism comprises cutting head device. The said cutting head device comprises a base plate, a large cylinder, a cutting head and a cutting head shaft assembly. The cutting head shaft assembly includes cutting head shaft and bearing. The said large cylinder is installed on the base plate perpendicular to the plate material to be cut. The cutting head is installed at the bottom of cutting head shaft assembly, and its top passes through the large cylinder, which controls the lifting and falling of cutting head shaft assembly, wherein the said plate material cutting mechanism further comprises the position limiter that limits the lifting height of cutting head shaft assembly, and the said position limiter is installed at the end of the base plate away from the plate material; the said position limiter comprises a positioning assembly and a displacement adjusting assembly that limits the lifting height of cutting head shaft assembly, and said displacement adjusting assembly is located between the cutting head shaft assembly and the positioning assembly and installed on either of them, and through the displacement adjustment, it can form an interval with the other.

The said cutting head shaft assembly comprises a cutting head shaft and a bearing, which makes the above cylinder not to rotate with cutting head shaft. The top of the cutting head shaft is supported by a bearing inner ring. Restricted by the large cylinder and bearings, the cutting head shaft can be securely stabilized in a direction perpendicular to the plate material so that precise cutting of the plate material can be realized.

The said displacement adjusting assembly is installed at the bottom of the positioning assembly, which will generate an interval with the top of the cutting head shaft assembly through displacement adjustment.

The said displacement adjusting assembly is installed at the top of the cutting head shaft assembly, which will generate an interval with the bottom of the positioning assembly through displacement adjustment.

The said positioning assembly comprises a brake and a positioning shaft, and the said brake is fixedly installed on the end of base plate away from the plate material, and the said positioning shaft is connected with the brake, which controls the position in the direction perpendicular to the plate material.

The said positioning assembly comprises a cylinder, a cylinder rod and a positioning shaft, and the said cylinder rod is installed on the cylinder piston. When positioning of the positioning shaft, the cylinder piston moves to extend the cylinder rod, to fix the positioning shaft and achieve positioning.

The said displacement adjusting assembly comprises a small cylinder and a small cylinder rod, and one end of said small cylinder rod is connected with the small cylinder to form an interval through the movement of small cylinder rod.

A limit pad is provided at the end of the said small cylinder rod.

The said displacement adjusting assembly comprises a motor, a motor shaft and an eccentric wheel. The motor shaft is installed on the motor and the eccentric wheel is installed at the end of motor shaft. The rotation of motor drives the rotation of the eccentric wheel to form an interval.

The said interval is 1-6 mm. Preferably for 3mm.

The working method of the plate material cutting mechanism, comprising the following steps:
(1) Adjust the cutting head or plate material, to make the cutting head at the starting point of cutting. The proportional valve controls the gas pressure of the large cylinder. The large cylinder controls the falling of cutting head shaft assembly installed with cutting head, and the positioning shaft and displacement adjusting assembly move in the direction approaching the plate material together with the cutting head shaft assembly, and stop movement until the cutting head moves to the surface of the plate material to be cut;
(2) The positioning assembly fixes the positioning shaft and through adjustment, the displacement adjusting assembly can form an interval;
(3) The cutting head starts cutting, and when reaching the end of cutting point, the large cylinder controls the cutting head shaft assembly to lift the cutting head with the lifting distance equal to the interval formed by the displacement adjusting assembly;
(4) Adjust the cutting head or plate material, to make the cutting head to align with the next starting point of cutting, the large cylinder controls the cutting head shaft assembly to lower the cutting head to the surface of the material to be cut and start cutting;
(5) Repeat the above procedures, until all cutting task is completed. The proportional control valve can control the cutting head shaft assembly, displacement adjustment assembly and positioning shaft to move in the direction away from the plate material by controlling the combined action of large cylinder and positioning assembly, and then return to the starting position.

The said position limiter may be not installed on the end of base plate away from the plate material, but installed abreast with the large cylinder. The position limiter can limit the lifting height of cutting head shaft assembly through a lever, which is attached to the position limiter at one end and parallel with the plate material. The position limiter can control the lever to approach to or away from the plate material in a direction perpendicular to the plate material, to form a mechanical limit and limit the lifting height of the cutting head shaft assembly. When working, the position limiter and said lever can lift and fall together with the lifting and falling of cutting head shaft assembly.

The method to control the lifting and falling of cutting head shaft assembly by the large cylinder is described as follows:
(1) The large cylinder has two gas ports and through control over the direction of gas in and out of cylinder, the lifting and falling of cutting head shaft assembly can be controlled;
(2) The large cylinder has one gas port, preset with a spring. When the gas pressure increases, the cutting head shaft assembly will fall; and when the gas pressure decreases, it will lift.

The above limit pad has thread, which can match with the threads of small cylinder rod; and through screwing or unscrewing the limit pad, the distance of the interval can be adjusted, for example, 1-6 mm.

The above adjustment of cutting head or plate material can make the cutting head at the stating point of cutting. Through the movement of bridge structure on the cutting table, the movement of cutting mechanism on the bridge structure, and the rotation of cutting head shaft assembly driven by the inscribed circle motor, the above adjustment can be collectedly or individually realized through the three ways. By moving the plate material, the cutting head can reach the starting point or end point of cutting.

The above interval is 1-6 mm, preferably, 3mm.

The cutting pressure in above step (2) is pre-set and controlled by a proportional valve. The cutting pressure is related to the hardness and thickness of the plate material to be cut.

Compared with prior art, the invention can achieve the following beneficial effects:
(1) In the present invention, the lifting and falling of cutting head shaft assembly and cutting head is driven by cylinder, which can reduce the cylinder load and accelerate the running speed compared with driving the whole cutting head assembly in prior art. When the cutting head shaft assembly and cutting head are lifted, under the action of position limiter, only the distance of the interval formed by the displacement adjusting assembly is required to be lifted. Compared with prior art, it can save a lot of energy and enhance the working efficiency.
(2) The present invention is applicable to the cutting of different thickness of plate material. Regardless of the thickness of the plate material to be cut, when the cutting head drops to the surface of the plate material, cutting can be started; thus, it has changed the defect of poor reliability caused by controlling the stroke of cutting head assembly through the thickness detection device in prior art.

### Brief Description of the Drawings

Fig. 1 shows the three-dimensional schematic view in cutting when the plate material cutting mechanism can move on the bridge structure and the bridge structure can move on the cutting table.
Fig. 2 shows the three-dimensional schematic view of the cutting head device and limit device;
Fig.3 shows the three-dimensional schematic view of the limit device when working;
Fig.4 shows the three-dimensional schematic view of small cylinder rod;

In the figures, 1. base plate, 2. large cylinder, 3. cutting head, 4., cutting head shaft assembly; 5. brake; 6. positioning shaft;7. small cylinder, 8. limit pad; 9. proportional valve; 10. bearing; 11. interval; 12. small cylinder rod; 13. bridge structure, 14. motor of bridge structure, 15. cutting table; 16. motor of cutting table, 17. inscribed circle motor.

### Detailed Descriptions of the Preferred Embodiments

The present invention will be further described in details in combination with the drawings and specific embodiments. It should be understood that the specific embodiments described herein are merely to illustrate the invention and are not intended to limit the present invention.

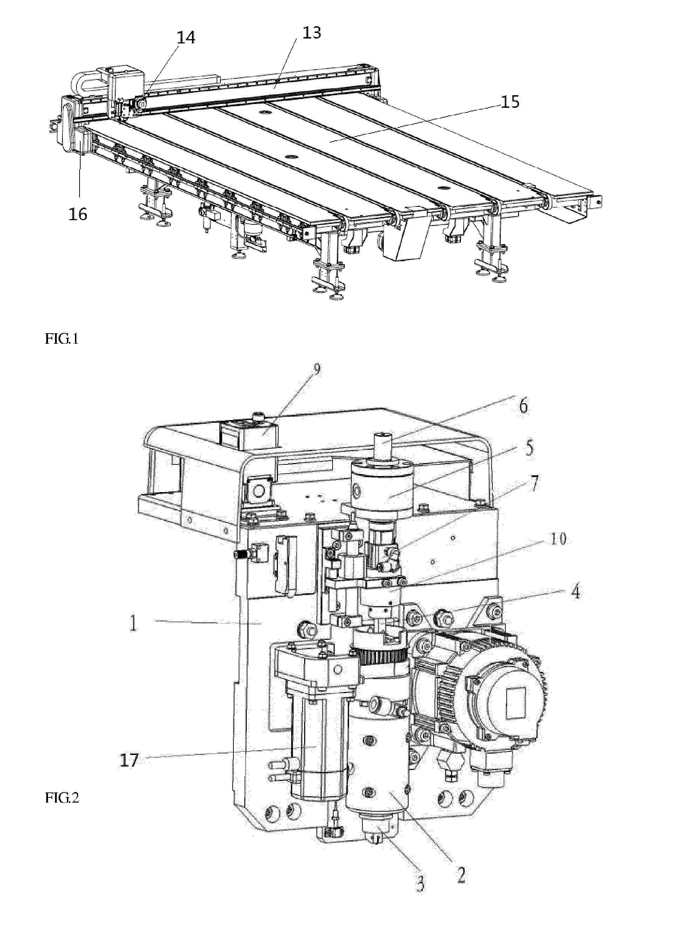

As illustrated in Fig.1, a plate material cutting mechanism is installed on the bridge structure 13, and its movement on bridge structure 13 is controlled by motor of bridge structure 14; the above bridge structure 13 is installed on the cutting table 15, and its movement on the cutting table 15 is controlled by the motor of cutting table 16.

As illustrated in Fig.2, a plate material cutting mechanism comprises cutting head device, and the said cutting head device includes base plate 1, large cylinder 2, cutting head 3, cutting head shaft 4 and bearing 10. The said large cylinder 2 is fixedly installed on the base plate 1 perpendicular to the plate material to be cut; at the bottom of cutting head shaft 4, the cutting head 3 is installed, and its top end passes through large cylinder 2, which controls the lifting and falling of cutting head shaft 4 and bearing 10. At the end of base plate 1 far from the plate material is installed with the brake 5 and positioning shaft 6, which are connected each other, and through brake 5, control the position in a direction perpendicular to the plate material.

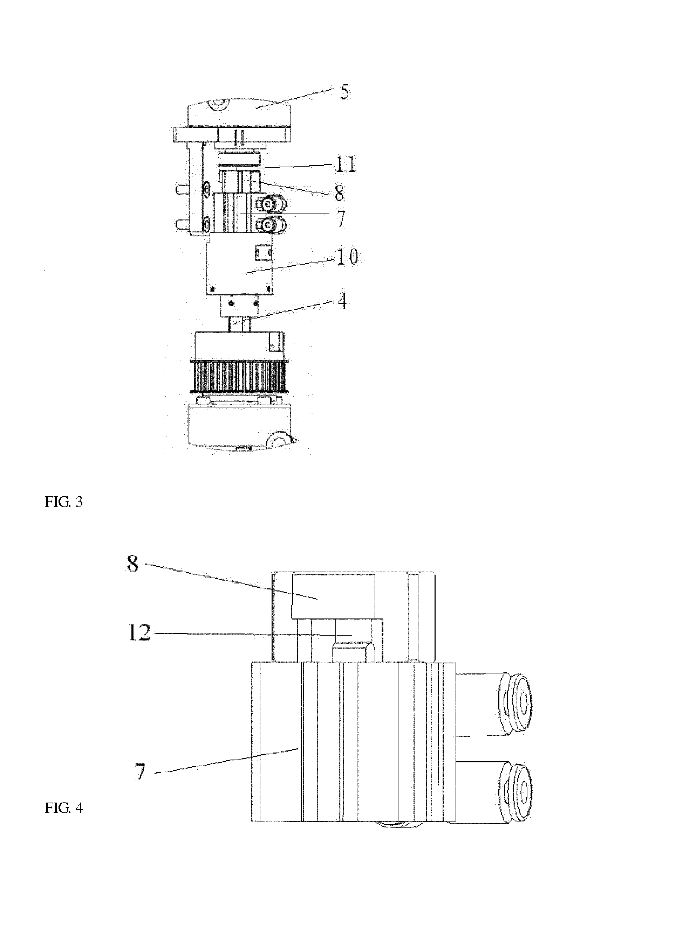

As illustrate in Fig.3, the small cylinder 7 and small cylinder rod 12 are installed between the brake 5, positioning shaft 6 and bearing 10. The small cylinder 7 is installed at the end of bearing 10, and one end of the said small cylinder rod 12 is connected to small cylinder 7, which forms the interval 11 through the movement of small cylinder rod 12. The limit pad 8 made of rubber or plastic, is provided at the end of the small cylinder rod 12. The purpose to adopt the limit pad 8 is to reduce the damage generating from the collisions between the metals, and reduce the noises.

Taking the glass as an example, when cutting, the glass is firstly conveyed to cutting table 15 through a conveyor belt, and the motor of cutting table 16 and motor of bridge structure 14 moves the cutting head 3 to the starting point of cutting; the proportional valve 9 controls the gas pressure of the large cylinder 2, which controls the falling of cutting head shaft 4 and bearing 10, the cutting head shaft 4 installed with the cutting head 3. The positioning shaft 6, small cylinder 7, small cylinder rod 12 and limit pad 8 moves towards to the direction close to the glass together with the cutting head shaft 4 and bearing 10, until the cutting head 3 stops moving when moving to the surface of glass to be cut. The brake 5 fixes the positioning shaft 6; and the small cylinder rod 12 moves into the small cylinder 7 to form an interval of 3 mm. The cutting head 3 starts cutting, and when reaching the end of cutting, the large cylinder 2 controls the cutting head shaft assembly to lift the cutting head 3, at this time, the bearing 10 and small cylinder 7 installed on the cutting head shaft 4 are lifted together, and the lifting distance is equal to the 3mm interval 11 generating when small cylinder rod 12 moves into the small cylinder 7. Adjust the cutting head 3 to align with the next starting point of cutting, and large cylinder 2 controls the cutting head shaft assembly to lower the cutting head 3 to the surface of glass and starts cutting. Repeat the above procedures, until all cutting task is completed. The proportional control valve 9 can control the cutting head shaft assembly, displacement adjustment assembly and positioning shaft 6 to move in the direction away from the glass by controlling the combined action of large cylinder 2 and brake 5, and return to the starting position.

The above are only preferred embodiments of the present invention. It should be noted that for those of ordinary skill in the art, under the premise without departing from the principle of the invention, further improvements and modifications may be made. For example, the conveying device of plate material is not placed horizontally but having a tilt angle with the horizontal plane, like the production line of insulating glass. All these improvements and modifications should also be regarded within the protection scope of the present invention.

## Claims

1. A plate material cutting mechanism comprises cutting head device, and said cutting head device comprises a base plate, a large cylinder, a cutting head and a cutting head shaft assembly. The cutting head shaft assembly includes cutting head shaft and bearing. The said large cylinder is installed on the base plate perpendicular to the plate material to be cut. The cutting head is installed at the bottom of cutting head shaft assembly, and its top passes through the large cylinder, which controls the lifting and falling of cutting head shaft assembly, wherein the said plate material cutting mechanism further comprises the position limiter that limits the lifting height of cutting head shaft assembly, and the said position limiter is installed at the end of the base plate away from the plate material; the said position limiter comprises a positioning assembly and a displacement adjusting assembly that limits the lifting height of cutting head shaft assembly, and said displacement adjusting assembly is located between the cutting head shaft assembly and the positioning assembly and installed on either of them, and through the displacement adjustment, it can form an interval with the other.

2. The plate material cutting mechanism according to claim 1, wherein the said positioning assembly comprises a brake and a positioning shaft, and the said brake is fixedly installed on the end of base plate away from the plate material, and the said positioning shaft is connected with the brake, which controls the position in the direction perpendicular to the plate material.

3. The plate material cutting mechanism according to claim 1, wherein the said positioning assembly comprises a cylinder, a cylinder rod and a positioning shaft, and the said cylinder rod is installed on the cylinder piston. When positioning of the positioning shaft, the cylinder piston moves to extend the cylinder rod, to fix the positioning shaft and achieve positioning.

4. The plate material cutting mechanism according to claim 1, wherein the displacement adjusting assembly comprises a small cylinder and a small cylinder rod, and one end of said small cylinder rod is connected with the small cylinder to form an interval through the movement of small cylinder rod.

5. The plate material cutting mechanism according to claim 4, wherein a limit pad is provided at the end of the said small cylinder rod.

6. The plate material cutting mechanism according to claim 1, wherein the said displacement adjusting assembly comprises a motor, a motor shaft and an eccentric wheel. The motor shaft is installed on the motor and the eccentric wheel is installed at the end of motor shaft. The rotation of motor drives the rotation of the eccentric wheel to form an interval.

7. The plate material cutting mechanism according to one of claims 1-6, wherein the said interval is 1-6 mm.

8. The plate material cutting mechanism according to one of claims 1-6, wherein the said interval is 3mm.

9. The plate material cutting mechanism according to claim 1, wherein the said plate material is glass.

10. The working method of the plate material cutting mechanism, comprising the following steps:
(1) Adjust the cutting head or plate material, to make the cutting head at the starting point of cutting. The proportional valve controls the gas pressure of the large cylinder. The large cylinder controls the falling of cutting head shaft assembly installed with cutting head, and the positioning shaft and displacement adjusting assembly move in the direction approaching the plate material together with the cutting head shaft assembly, and stop movement until the cutting head moves to the surface of the plate material to be cut;
(2) The positioning assembly fixes the positioning shaft and through adjustment, the displacement adjusting assembly can form an interval;
(3) The cutting head starts cutting, and when reaching the end of cutting point, the large cylinder controls the cutting head shaft assembly to lift the cutting head with the lifting distance equal to the interval formed by the displacement adjusting assembly;
(4) Adjust the cutting head or plate material, to make the cutting head to align with the next starting point of cutting, the large cylinder controls the cutting head shaft assembly to lower the cutting head to the surface of the material to be cut and start cutting;
(5) Repeat the above procedures, until all cutting task is completed. The proportional control valve can control the cutting head shaft assembly, displacement adjustment assembly and positioning shaft to move in the direction away from the plate material by controlling the combined action of large cylinder and positioning assembly, and then return to the starting position.
